# EUROPÄISCHE PATENTSCHRIFT

(11) **EP 1 563 638 B1**
(45) Veröffentlichungstag und Bekanntmachung des Hinweises auf die Patenterteilung: **07.06.2006**
(21) Anmeldenummer: 03776641.7
(22) Anmeldetag: 21.11.2003
(51) Int. Cl.: H04L 9/08

(54) **KOMMUNIKATIONSSYSTEM MIT QUANTENKRYPTOGRAPHIE UND VERMITTLUNGSSTATIONEN**
COMMUNICATION SYSTEM USING QUANTUM CRYPTOGRAPHY AND COMPRISING SWITCHING STATIONS
SYSTEME DE COMMUNICATION PAR CRYPTOGRAPHIE QUANTIQUE ET STATIONS DE COMMUTATION

(30) Priorität: 22.11.2002 AT 17552002
(43) Veröffentlichungstag der Anmeldung: 17.08.2005
(73) Patentinhaber: ARC Seibersdorf research GmbH, 1010 Wien (AT)
(72) Erfinder: KOLLMITZER, Christian, A-9061 Klagenfurt (AT)
(74) Vertreter: Sonn & Partner Patentanwälte
(86) Internationale Anmeldenummer: PCT/AT2003/000351
(87) Internationale Veröffentlichungsnummer: WO 2004/049623

(56) Entgegenhaltungen:
- WO-A-02/05479
- ELLIOTT C: "Building the quantum network" NEW JOURNAL OF PHYSICS, 2002, DEUTSCHE PHYSIKALISCHE GESELLSCHAFT & IOP PUBLISHING LTD, UK, Bd. 4, 12. Juli 2002 (2002-07-12), Seiten 46.1-46.12, XP002271991 ISSN: 1367-2630
- GISIN, N., RIBORDY, G., TITTEL, W., ZBINDEN, H.: "Quantum cryptography" ARXIV: QUANT-PH/0101098, [Online] 18. September 2001 (2001-09-18), Seiten 1-57, XP002271992 Gefunden im Internet: <URL:http://arxiv.org/PS_cache/quant-ph/pd f/0101/0101098.pdf> [gefunden am 2004-03-01]

## Beschreibung

Die Erfindung betrifft ein Kommunikationssystem mit Quantenkryptographie, mit an Quantenkanäle angeschlossenen Teilnehmerstationen und den Quantenkanälen zugeordneten quantenkryptographischen Einrichtungen zur Generierung eines Quanten-Schlüssels, gemäß dem einleitenden Teil von Anspruch 1. Ein derartiges Kommunikationssystem ist aus ELLIOTT C: "Building the quantum network" NEW JOURNAL OF PHYSICS, 2002, DEUTSCHE PHYSIKALISCHE GESELLSCHAFT & IOP PUBLIS-HING LTD, UK, Bd. 4, 12. Juli 2002 (2002-07-12), Seiten 46.1-46.12, XP002271991 ISSN: 1367-2630 bekannt.

Die Quantenkryptographie verwendet quantenphysikalische Effekte, um zwischen Kommunikations-Partnern einen mehr oder weniger abwehrsicheren Schlüssel zu generieren, vgl. beispielsweise N. Gisin, G. Ribordy, W. Tittel, H. Zbinden, "Quantum Cryptography", Reviews of Modern Physics, Vol. 74, Jan. 2002, S. 145-195, oder A. Karlsson et al., "Quantum Cryptography-From Single-Photon Transmission, Key Extraction Methods to Novel Quantum Information Protocols", Evolutionary Computation, 1999; CEC 99; Proceedings of the 1999 Congress, Vol. 3, 6-9, July 1999, S. 2247-2254. Im Einzelnen werden bei der Quantenkryptographie zwischen zwei Partnern Photonen ausgetauscht, die Quanten-Information enthalten. Die beiden Partner messen bestimmte Eigenschaften dieser Photonen, wie z.B. die Polarisationsebene, erhalten die selben Messergebnisse und können daher einen identen Quanten-Schlüssel aufbauen. Dabei werden Teile der Messergebnisse, wie z.B. die exakten Zeitpunkte, über öffentliche Kanäle ausgetauscht. Auf diese Weise können die beiden Partner die einzelnen Messungen einander exakt zuordnen.

Im Prinzip gibt es hierbei zwei Methoden, nämlich jene unter Verwendung von Einzelphotonen und jene unter Verwendung von verschränkten Photonen. Im Fall der Einzelphotonen-Methode erzeugt ein Partner eine Folge von einzelnen Photonen, die durch einen Polarisator geschickt werden, dessen Polarisationsebene zufällig variiert wird. Die Einstellung des Polarisators wird dem anderen Partner übermittelt. Wenn dann von diesem anderen Partner ein Photon registriert wird, ist damit auch dessen Polarisationsebene eindeutig festgelegt. Bei dieser Methode muss jedoch sichergestellt sein, dass tatsächlich nur jeweils ein einzelnes Photon erzeugt wird, da im Fall mehrerer Photonen derselben Polarisation ein Photon von einem Dritten abgefangen werden könnte.

Bei der Methode der verschränkten Photonen werden durch eine spezielle Technik zwei Photonen gleichzeitig erzeugt, die die selbe Quanten-Information enthalten. Je ein Photon wird zu einem der beiden Partner gesandt, so dass die beiden Partner gleichzeitig ein identes Messergebnis erhalten und somit jeder für sich den selben Quanten-Schlüssel aufbauen kann.

Die Photonen können bei der Generierung des Quanten-Schlüssels z.B. über eine Glasfaserverbindung, aber auch über direkte Sichtverbindungen zwischen zwei Teleskopen etc. ausgetauscht werden. Bisherige Aufbauten verwendeten diese Glasfaserverbindungen oder direkten Sichtverbindungen zur Kommunikation unter Anwendung der beschriebenen Quantenkryptographie. Dabei ist von Nachteil, dass die Verbindungen nur über relativ kurze Strecken, beispielsweise einige wenige Kilometer, aufgebaut werden können, um eine Übertragung der Photonen zu ermöglichen, so dass die Anwendung der Quantenkryptographie bisher auf Partnerstationen mit bloß geringen Abständen beschränkt ist. Überdies sind die Einrichtungen für die Glasfaserverbindung oder Sichtverbindung auch relativ teuer, und es wäre wünschenswert, für die verschlüsselte Kommunikation bekannte preiswerte Verbindungen, insbesondere bereits vorhandene Einrichtungen verwenden zu können.

Es ist nun Aufgabe der Erfindung, eine Technik vorzusehen, mit der die beschriebenen sicheren Quanten-Schlüssel auf rationelle Weise generiert und genutzt werden, wobei doch in der Folge große Übertragungs-Reichweiten möglich sind, und überdies für die Kommunikation preiswerte öffentliche Leitungen - jedoch ohne Beeinträchtigung der durch die Quantenkryptographie erzielten Sicherheit - verwendet werden können. Dabei soll die Kommunikation nicht an bestimmte kryptographische Algorithmen gebunden sein, und es soll jederzeit möglich sein, in einem bestehenden System kryptographische Algorithmen zu ergänzen bzw. zu ersetzen.

Zur Lösung dieser Aufgabe sieht die Erfindung ein Kommunikationssystem wie in Anspruch 1 definiert vor. Vorteilhafte Ausführungsformen und Weiterbildungen sind in den abhängigen Ansprüchen angegeben.

Bei der erfindungsgemäßen Technik ist es nicht erforderlich, dass die beiden Kommunikationspartner jeweils direkt einen sicheren Schlüssel austauschen, vielmehr wird jeweils ein Quanten-Schlüssel zwischen einem Kommunikationspartner - d.h. einer Teilnehmerstation - und einer Vermittlungsstation, einer "Stelle des Vertrauens", generiert. Jeder Vermittlungsstation kann somit eine Zone zugeordnet werden, in der zugehörige Teilnehmerstationen vorhanden sind, die über relativ kurze Quantenkanäle (beispielsweise die vorstehend angesprochenen Glasfaserleitungen oder aber Sichtverbindungen mit Teleskopen) mit der zugehörigen Vermittlungsstation verbunden sind. Die Vermittlungsstationen sind sodann untereinander über herkömmliche Kanäle miteinander verbunden, die in irgendeiner an sich bekannten Weise abhörsicher gestaltet sind, wie etwa durch vereinbarte Verschlüsselungen. Dadurch, dass nun nicht mehr die Teilnehmerstationen bzw. Kommunikationspartner direkt über einen sicheren Kanal Schlüssel austauschen müssen, können auch weit voneinander entfernte Teilnehmerstationen unter Verwendung öffentlicher Verbindungsleitungen mit dem durch die Quantenkryptographie gewährleisteten hohen Sicherheitsgrad miteinander kommunizieren. Für eine solche Kommunikation ergeben sich somit im Wesentlichen drei Schritte, nämlich erstens die von einer ersten Teilnehmerstation kommende Aufforderung zum Aufbau der Kommunikation; danach zweitens der Aufbau der sicheren Kommunikation unter Generierung der Quanten-Schlüssel; und drittens die tatsächliche Kommunikation zwischen den Teilnehmerstationen unter Verwendung des zuvor generierten Quanten-Schlüssels.

Bei der erfindungsgemäßen Technik ist auch von besonderem Vorteil, dass die Teilnehmerstationen mit relativ einfachen quantenkryptographischen Einrichtungen ausgerüstet werden können, wogegen die aufwendigen Einrichtungen in den Vermittlungsstationen konzentriert werden können. Demgemäß ist es von Vorteil, wenn die Vermittlungsstationen als quantenkryptographische Einrichtung eine Photonenquelle sowie für den Fall der Verwendung von verschränkten Photonen auch einen Photonendetektor enthalten. Demgegenüber können die Teilnehmerstationen einfach nur eine Photonen-Detektionseinrichtung enthalten. Es liegt somit die Photonenquelle nur an den Vermittlungsstationen vor, und auf der Teilnehmerstationen-Seite genügen die technischen Mittel zum Detektieren der Photonen.

Es wird wie erwähnt immer ein eigener Quanten-Schlüssel zwischen den Teilnehmerstationen (Kommunikationspartnern) und der ihnen zugehörigen Vermittlungsstation aufgebaut. Sollten einmal beide Teilnehmerstationen über ihre Quantenkanäle mit ein und der selben Vermittlungsstation verbunden sein, so werden bei der erfindungsgemäßen Technik trotzdem ebenfalls die zwei Quanten-Schlüssel unabhängig voneinander generiert, auch wenn dies beispielsweise bei Verwendung von verschränkten Photonen grundsätzlich nicht erforderlich wäre. Es können auf diese Weise immer die selben Protokolle und die selben Verfahren zur Fehlerkorrektur verwendet werden.

Die Vermittlungsstationen können an sich in der Vermittlungstechnik bekannter Weise zumindest teilweise in Form von Punkt-zu-Punkt-Verbindungen oder aber auch hierarchisch miteinander verbunden sein.

Bei der erfindungsgemäßen Technik ist von Vorteil, dass die Quantenkanäle nur im Zuge der Generierung der Quanten-Schlüssel verwendet werden brauchen, und sobald die Quanten-Schlüssel erzeugt worden sind, können die Kommunikationspartner auf an sich herkömmliche Weise miteinander in Verbindung treten, d.h. die Teilnehmerstationen können über öffentliche Leitungen unter Verwendung des über die Vermittlungsstationen generierten Quanten-Schlüssels kommunizieren. Auf diese Weise werden die an sich kostenintensiven Quantenleitungen bzw. Quantenkanäle nur für die Quanten-Schlüsselgenerierung frei gehalten und genützt, und für die nachfolgende Kommunikation unter Verwendung der Quanten-Schlüssel können herkömmliche Leitungen bzw. Kanäle verwendet werden, wie etwa Telefonleitungen, Funkkanäle und dergl. Verbindungen.

Wie bereits vorstehend ausgeführt ist bevorzugt vorgesehen, dass jeweils zwischen der Teilnehmerstation und der zugehörigen Vermittlungsstation ein Quanten-Schlüssel generiert wird, und demgemäß sieht eine bevorzugte Ausführungsform das erfindungsgemäße Kommunikationssystem vor, dass nach einer über die jeweilige Vermittlungsstation übermittelten Kommunikations-Aufforderung die an der gewünschten Kommunikation beteiligten Teilnehmerstationen jeweils mit ihrer zugehörigen Vermittlungsstation über den Quantenkanal eine gesonderte - erste bzw. zweite - Schlüssel-Bitfolge erzeugen. Hierbei ist es weiters vorteilhaft, wenn die der gerufenen Teilnehmerstation zugehörige Vermittlungsstation aus den über die Quantenkanäle erzeugten Schlüssel-Bitfolgen eine dritte Schlüssel-Bitfolge erzeugt und zur gerufenen Teilnehmerstation übermittelt, die hieraus unter Verwendung der ihr bekannten, von ihr zusammen mit der zugehörigen Vermittlungsstation erzeugten - zweiten - Schlüssel-Bitfolge die auf Seiten der rufenden Teilnehmerstation erzeugte - erste - Schlüssel-Bitfolge erzeugt, die dann endgültig als gemeinsamer Schlüssel für die Kommunikation zwischen den Teilnehmerstationen verwendet wird.

Aus Sicherheitsgründen ist weiters bevorzugt vorzusehen, dass bei Beenden der Kommunikation der für diese Kommunikation generierte Quanten-Schlüssel verworfen wird.

Es ist bekannt, dass bei Messung von Photoneneigenschaften die Information des jeweiligen Photons zerstört wird. Wenn daher ein unauthorisierter Dritter Information durch Messung abfängt, wird damit verhindert, dass der authorisierte Kommunikationspartner die korrekte Information erhält. Durch Vergleich von Teilen der Messung zwischen den beiden berechtigten Kommunikationspartnern kann daher eindeutig festgestellt werden, ob von einem nicht authorisierten Dritten abgehört wurde oder nicht. Es ist daher erfindungsgemäß besonders günstig, wenn der generierte Quanten-Schlüssel auf Störungsfreiheit überprüft wird, und wenn auf eine etwaige erfasste Störung hin, die einem Abhören zugeordnet wird, der Kommunikationsaufbau abgebrochen und der Schlüssel verworfen wird.

Wie bereits erwähnt können die fest eingerichteten Vermittlungsstationen über herkömmliche, insbesondere öffentliche Leitungen, unter Anwendung von vereinbarter Verschlüsselung miteinander kommunizieren.

Aus Gründen der Sicherheit sowie der Überprüfung von Berechtigungen kann schließlich mit Vorteil auch vorgesehen werden, dass vor dem Aufbau einer Kommunikation zwischen Teilnehmerstationen von diesen an die jeweils zugehörige Vermittlungsstation übermittelte, für sie spezifische Daten, wie z.B. Authentifikationsdaten, von der jeweiligen Vermittlungsstation überprüft werden.

Die Erfindung wird nachstehend anhand von besonders bevorzugten Ausführungsbeispielen, auf die sie jedoch nicht beschränkt sein soll, und unter Bezugnahme auf die beiliegende Zeichnung noch weiter erläutert. Im Einzelnen zeigen in der Zeichnung:
Fig. 1 schematisch den Aufbau eines erfindungsgemäßen Systems mit Vermittlungsstationen und jeweils zugeordneten Teilnehmerstationen;
Fig. 2 ein hierarchisches Modell zur Verbindung der einzelnen Vermittlungsstationen untereinander;
Fig. 3 als Alternative zu Fig. 2 ein Punkt-zu-Punkt-Modell für die Verbindung der Vermittlungsstationen;
Fig. 4 schematisch in einer Art Blockschaltbild die wesentlichen quantenkryptographischen Einrichtungen in einer Vermittlungsstation bzw. einer Teilnehmerstation, hier für den Fall der Erzeugung von verschränkten Photonen;
Fig. 5A ein Schema zur Veranschaulichung des Ablaufs im Fall einer Aufforderung zum Aufbau einer Kommunikation durch eine Teilnehmerstation, wobei hier ein ressourcenorientierter Aufbau erfolgt;
Fig. 5B als Alternative hierzu ein Schema für den Ablauf bei einer Aufforderung zu einem geschwindigkeitsorientierten Kommunikationsaufbau;
Fig. 6 ein Schema zur Veranschaulichung des Aufbaus der sicheren Kommunikation im Falle der Kommunikationsanforderungen gemäß Fig. 5A bzw. 5B;
die Fig. 7A und 7B in entsprechender Weise zu Fig. 5A und 5B die Situation, wenn die anfragende Teilnehmerstation und die gewünschte Teilnehmerstation ein und der selben Vermittlungsstation zugeordnet sind, und zwar wiederum für den Fall des ressourcenorientierten Kommunikationsaufbaus (Fig. 7A) bzw. den Fall des geschwindigkeitsorientierten Kommunikationsaufbaus (Fig. 7B);
Fig. 8 ein zu den Figuren 7A und 7B gehöriges Schema zur Veranschaulichung des Aufbaus der sicheren Kommunikation zwischen den beiden Teilnehmerstationen, die hier mit ein und der selben Vermittlungsstation verbunden sind;
Fig. 9 ein Ablaufdiagramm zur Veranschaulichung der Schritte bei Aufforderung zu einem Kommunikationsaufbau unter Einbindung von zwei Vermittlungsstationen;
Fig. 10 ein zugehöriges Ablaufdiagramm zur Veranschaulichung des Aufbaus der sicheren Kommunikation hierzu;
Fig. 11 der Vollständigkeit halber ein Ablaufdiagramm zur Veranschaulichung der Vorgänge bei Aufforderung zum Aufbau einer Kommunikation, wenn nur eine Vermittlungsstation beteiligt ist;
Fig. 12 das zu Fig. 11 zugehörige Ablaufdiagramm zur Veranschaulichung des Aufbaus der sicheren Kommunikation, wenn nur eine Vermittlungsstation beteiligt ist; und
Fig. 13 ein Ablaufdiagramm zur Veranschaulichung der Generierung einer Schlüssel-Bitfolge zwischen einer Teilnehmerstation und einer Vermittlungsstation.

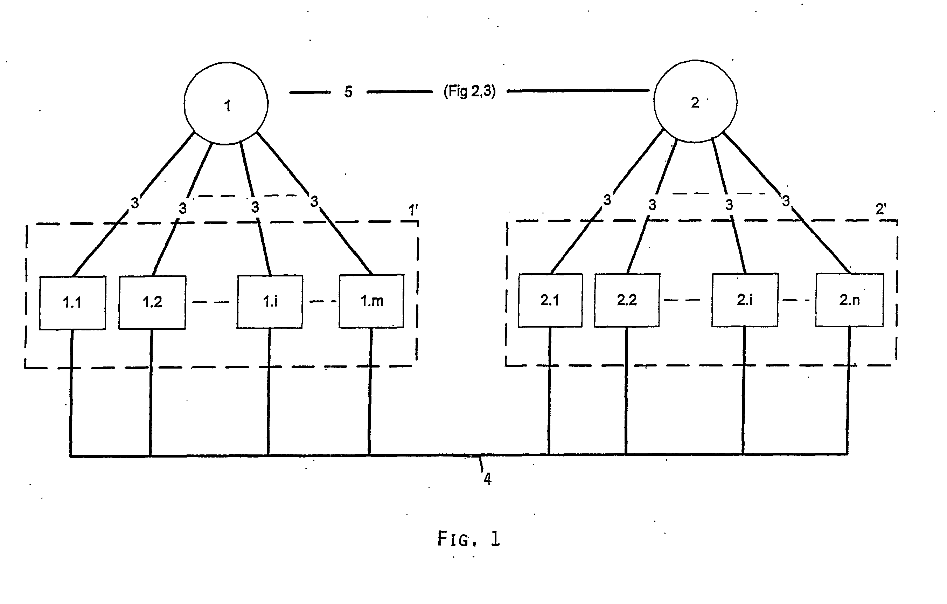

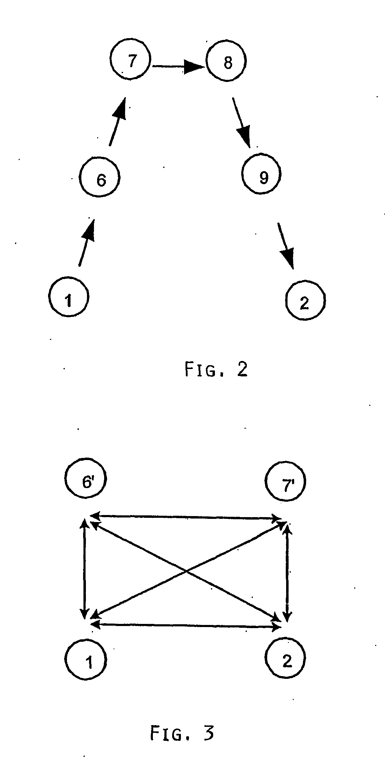

In Fig. 1 ist schematisch ein Kommunikationssystem mit festen Vermittlungsstationen 1, 2.. gezeigt, wobei an jede Vermittlungsstation 1, 2 ein oder mehrere Teilnehmerstationen, beispielsweise die Teilnehmerstationen 1.1, 1.2, .., 1.i, .., 1.m an die Vermittlungsstation 1 bzw. die Teilnehmerstationen 2.1, 2.2, .., 2.i, .., 2.n an die Vermittlungsstation 2, über Quantenkanäle 3 angeschlossen sind. (Unter "Quantenkanal" ist dabei an sich die Kombination sowohl der für die Quantenkryptographie notwendigen Leitung zum Austausch von Photonen als auch einer öffentlichen Leitung zu verstehen.) Weiters sind die Teilnehmerstationen 1.i, 2.i, .. über öffentliche Leitungen 4 untereinander verbunden. Die Vermittlungsstationen 1, 2.. können auf verschiedene Arten untereinander verbunden sein, wie nachstehend anhand der Figuren 2 und 3 noch näher erläutert werden wird. Selbstverständlich ist es auch denkbar, dass an eine Vermittlungsstation 1, 2 nur eine feste Teilnehmerstation über einen Quantenkanal bzw. eine Quantenleitung 3 angeschlossen ist, und die jeweils angeschlossenen Teilnehmerstationen bilden eine der betreffenden Vermittlungsstation 1, 2 zugehörige Vermittlungszone oder "Vertrauenszone" 1' bzw. 2'. Über die Quantenkanäle 3 werden von der jeweiligen Teilnehmerstation und der zugehörigen Vermittlungsstation gemeinsam die für die jeweilige sichere Kommunikation erforderlichen Quanten-Schlüssel generiert, und die nachfolgende Kommunikation unter Verwendung dieses Quanten-Schlüssels erfolgt über die öffentlichen Leitungen 4. Die Vermittlungsstationen 1, 2 haben somit die Funktion, mit den Teilnehmerstationen 1.i, 2.i zusammen den sicheren Quanten-Schlüssel zu erzeugen und das Vorhandensein ein und des selben Schlüssels auf beiden Kommunikationsseiten, d.h. bei beiden in eine Kommunikation miteinander eingebundenen Teilnehmerstationen, sicherzustellen. Die Vermittlungsstationen 1, 2.. sind dabei über öffentliche Leitungen, Standleitungen oder dergl. Kanäle 5 miteinander verbunden, wobei jedoch eine Verschlüsselung für die Kommunikation zwischen den Vermittlungsstationen 1, 2 vorgesehen ist, um so den Informationsaustausch bei der Schlüsselerzeugung auch von dieser Seite her sicher zu gestalten. Die Vermittlungsstationen 1, 2 bilden solcherart "Stellen des Vertrauens" ("Points of Trust"), wobei die miteinander kommunizierenden Vermittlungsstationen 1, 2 - je nach Architektur - einen Schlüssel ausgetauscht haben müssen.

Der Aufbau des Netzes mit den Vermittlungsstationen 1, 2 kann dabei auf an sich herkömmliche, unterschiedliche Arten vorgesehen sein, wobei zwei Möglichkeiten als Beispiele in den Figuren 2 und 3 veranschaulicht sind. In Fig. 2 ist ein hierarchisches Modell gezeigt, wobei die Verbindung zwischen den beiden Vermittlungsstationen 1, 2 (s. auch Fig. 1) über eine hierarchische Struktur, zunächst aufsteigend, danach wieder absteigend, über Vermittlungsstationen 6, 7, 8, 9 bewerkstelligt wird.

Gemäß Fig. 3 können die dort gezeigten Vermittlungsstationen 1, 2, 6', 7' jeweils direkt miteinander kommunizieren, d.h. es liegt ein sog. Point-to-Point-Modell vor. Die konkrete Art der Verbindung zwischen den Vermittlungsstationen 1, 2 ist jedoch für die Funktion des vorliegenden Kommunikationssystems mit Quantenkryptographie nicht weiter von Bedeutung. Wesentlich ist nur, dass für die Herstellung einer sicheren, quantenkryptographisch verschlüsselten Kommunikation zwischen Teilnehmerstationen 1.i, 2.i derartige Vermittlungsstationen 1, 2 eingebunden sind, wobei diese Vermittlungsstationen 1, 2 untereinander auf sichere Weise verbunden sind, so dass die für die Schlüsselgenerierung auf Seiten beider in eine Kommunikation eingebundenen Teilnehmerstationen erforderlichen Schlüssel-Bitfolgen (sog. "Streams") über die - aufgrund der technischen Gegebenheiten notwendigerweise kurzen - Quantenkanäle 3 und über die Vermittlungsstationen 1, 2 usw. ausgetauscht werden können; im Hinblick darauf können die Teilnehmerstationen 1.i, 2.i auch in beliebigen, großen Abständen voneinander vorhanden sein. Damit wird zwischen weit voneinander entfernten Teilnehmerstationen 1.i, 2.i eine Kommunikation unter Anwendung von Quantenkryptographie ermöglicht, also ohne Beschränkung auf die kurzen Distanzen, wie sie bisher durch die Quantenkanäle 3 bedingt sind, die durch Glasfaserleitungen oder mittels Teleskop-realisierten Sichtverbindungen gegeben sind.

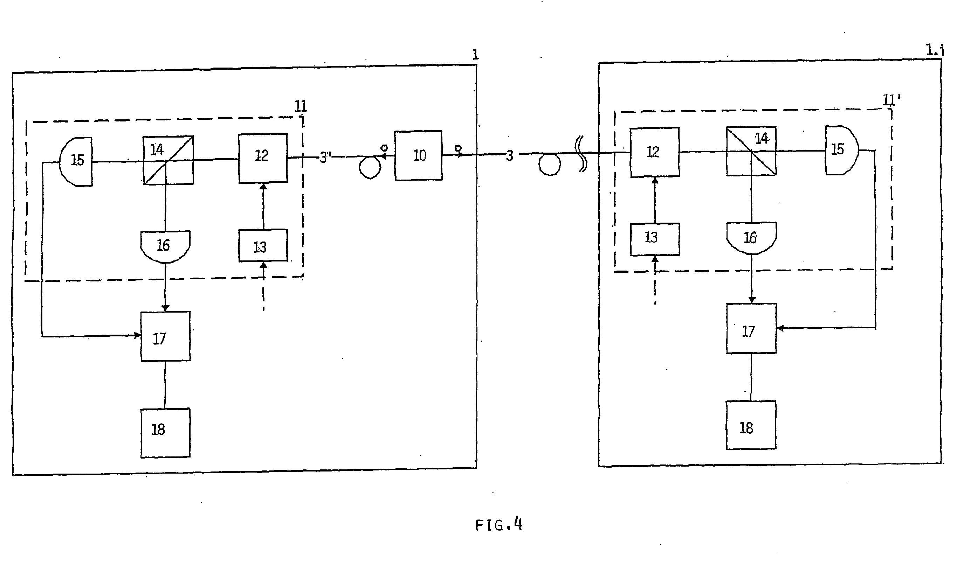

Anhand der Fig. 4 soll nun zum leichteren Verständnis kurz das an sich bekannte Prinzip der Quantenkryptographie erläutert werden. Quantenkryptographie hat aufgrund der besonderen "Zufälligkeit" bestimmter Eigenschaften von dabei verwendeten Photonen eine hohe Sicherheit. Bei der Quantenkryptographie werden zwischen zwei Partnern Photonen ausgetauscht, die Quanten-Information beinhalten. Beide Partner messen gewisse Eigenschaften dieser Photonen (z.B. die Polarisationsebene), erhalten die selben Messergebnisse und können daher einen identen Schlüssel aufbauen. Dabei werden Teile der Messergebnisse - z.B. die exakten Zeitpunkte - über öffentliche Kanäle ausgetauscht. Dadurch können beide Partner die einzelnen Messungen exakt zuordnen.

Mit der Messung wird die Information des einzelnen Photons zerstört, es kann daher immer nur ein Empfänger eines Photons die Messung durchführen. Aufgrund quantenphysikalischer Gesetze können Photonen mit definierten Eigenschaften nicht künstlich erzeugt werden. Ein dritter Partner, der die Information durch Messung abfängt, verhindert damit, dass der autorisierte Partner die korrekte Information erhält. Durch Vergleich von Teilen der Messung zwischen den beiden berechtigten Kommunikationspartnern kann daher eindeutig festgestellt werden, ob ein Dritter abgehört hat oder nicht.

Prinzipiell wird zwischen zwei Methoden unterschieden:
(1) Einzelphotonen: Ein Partner erzeugt eine Folge von einzelnen Photonen, die er durch einen Polarisator schickt, dessen Polarisationsebene zufällig variiert wird. Die Einstellung des Polarisators wird übermittelt. Wird vom anderen Partner ein Photon registriert, ist damit seine Polarisationsebene eindeutig festgelegt. Dabei muss jedoch sichergestellt werden, dass tatsächlich nur ein einzelnes Photon erzeugt wird, da bei mehreren Photonen der selben Polarisation eines der Photonen von einem Dritten abgefangen werden könnte.
(2) Verschränkte Photonen (sog. "qubits"): Durch spezielle Verfahren werden zwei Photonen gleichzeitig erzeugt, die die selbe Quanten-Information enthalten. Jedes Photon wird zu einem der beiden Partner gesandt, so dass die Partner gleichzeitig das idente Messergebnis erhalten und somit einen identen Schlüssel aufbauen können.

In der klassischen Quantenkryptographie wird davon ausgegangen, dass zwischen den beiden Kommunikationspartnern Photonen ausgetauscht werden. Diese Photonen stammen aus einer Quelle, die je nach gewähltem Verfahren entweder direkt bei einem der beiden Kommunikationspartner (Einzelphotonen-Verfahren) oder zwischen den beiden Partnern (Verschränkte Photonen) angeordnet ist.

Im Rahmen der Erfindung ist es ausreichend, dass die Photonenquelle nur bei einem der beiden Kommunikationspartner, nämlich insbesondere der Vermittlungsstation, z.B. 1, installiert ist. In der Vermittlungsstation 1 sind somit sowohl die Photonenquelle als auch - bei Verwendung von verschränkten Photonen - ein Photonen-Detektor vorhanden. In der Teilnehmerstation, z.B. 1.i, sind dann lediglich die technischen Voraussetzungen zum Detektieren der Photonen erforderlich.

Demgemäß ist in Fig. 4 beispielhaft die Vermittlungsstation 1 gezeigt, die wie erwähnt über einen Quantenkanal 3 mit zugehörigen Teilnehmerstationen, insbesondere der Teilnehmerstation 1.i, verbunden ist, wobei eine Photonenpaar-Quelle 10 in der Vermittlungsstation 1 vorgesehen ist. Diese Photonenpaar-Quelle 10 ist über eine interne Quantenleitung 3' weiters mit einem Photonen-Detektor 11 innerhalb der Vermittlungsstation 1 verbunden; ein korrespondierend aufgebauter Detektor 11' ist in der Teilnehmerstation 1.i vorhanden, und es wird nachfolgend immer ein Detektor, z.B. 11, unter Bezugnahme auf die für beide Detektoren 11, 11' gleich bezeichneten Komponenten 12 bis 18 erläutert werden.

Der Detektor, z.B. 11, enthält eingangsseitig einen aktiven Polarisator 12, dem über eine Steuereinheit 13 ein entsprechendes Einstellsignal zugeführt wird. Das Photon gelangt dann zu einem polarisierenden Strahlteiler 14, dem zwei Lawinenphotodioden 15, 16 nachgeschaltet sind, an deren Ausgänge eine Analyseeinheit 17, z.B. ein Zeitintervallanalysator, angeschlossen ist. Im Übrigen sind die sonst üblichen Kommunikationsansteuereinheiten zusammen mit einem Schaltungsmodul 18 zusammengefasst.

Die Photonenpaar-Quelle 10 kann in herkömmlicher Weise mit einem Pumpstrahllaser aufgebaut sein, wobei der Pumpstrahl einem nicht-linearen Kristall, z.B. einem Barium-Borat-Kristall ("BBO-Kristall") zugeführt wird, wobei durch diese Laserbestrahlung die verschränkten Photonen oder "qubits" erzeugt werden.

Wie erwähnt wird immer ein eigener Schlüssel zwischen einer Vermittlungsstation, z.B. 1, und dazugehörigen Teilnehmerstation, z.B. 1.1, erzeugt, und zwar auch dann, wenn beide Teilnehmerstationen, z.B. 1.1 und 1.2, ein und der selben Vermittlungsstation, z.B. 1, zugeordnet sind. Dies wäre an sich bei Verwendung der Methode der verschränkten Photonen nicht notwendig, jedoch können dann, wenn immer die zwei Schlüssel unabhängig voneinander generiert werden, auch immer die selben Protokolle und die selben Verfahren zur Fehlerkorrektur angewendet werden.

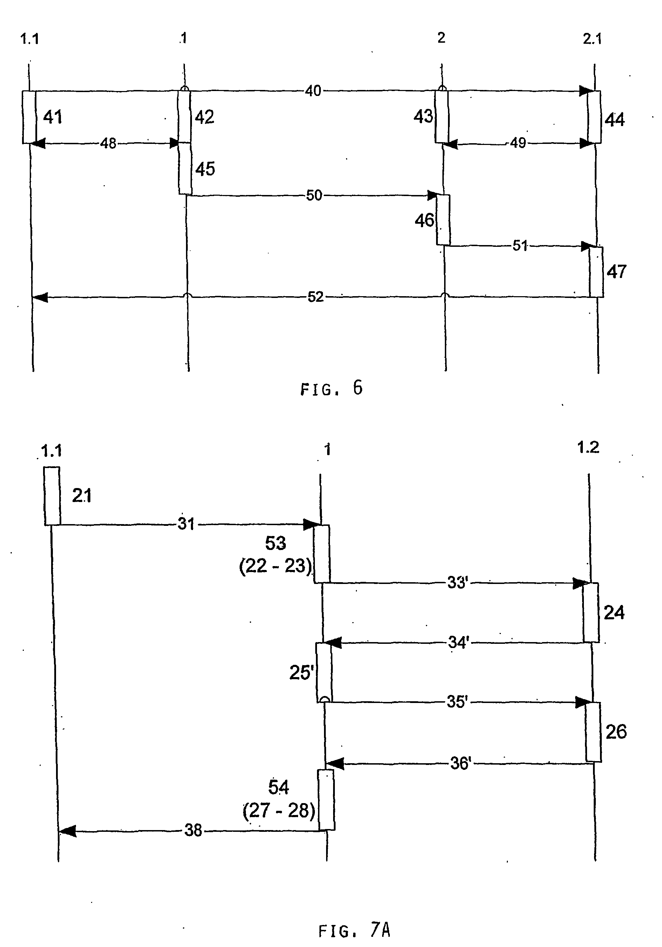

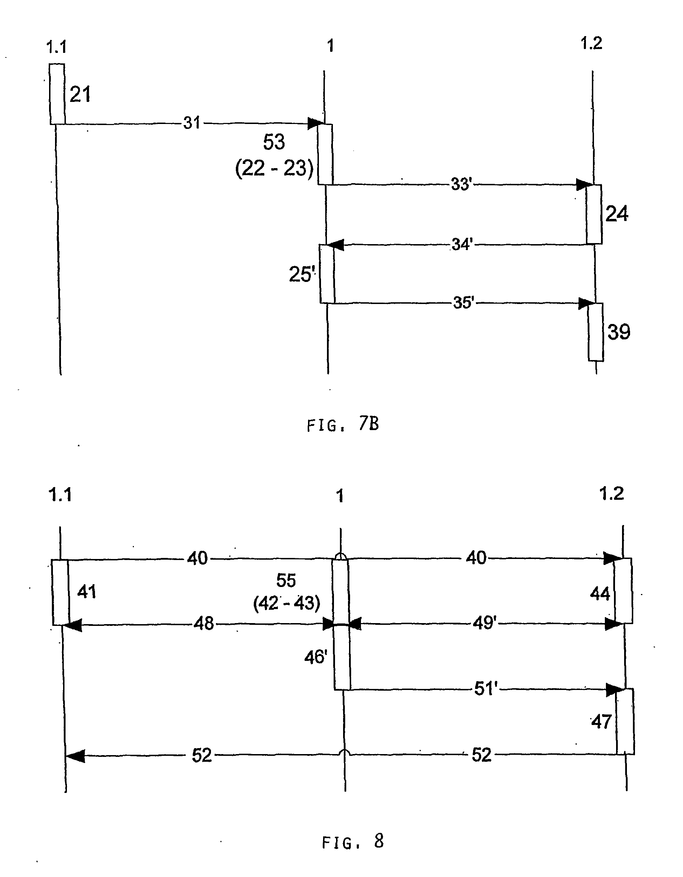

Wie weiters erwähnt ist es beim vorliegenden Kommunikationssystem nicht mehr notwendig, dass die miteinander kommunizierenden Teilnehmerstationen zuvor über einen sicheren Kanal (Quantenkanal) Schlüssel austauschen, dies erfolgt vielmehr unter Einbindung der jeweils zugehörigen Vermittlungsstation, wobei die Vermittlungsstation den hohen Sicherheitsgrad bei der Kommunikation - in Verbindung mit dem erzeugten Quanten-Schlüssel - sicherstellen. Bevor eine Kommunikation zwischen zwei Teilnehmerstationen, z.B. 1.1 und 2.1 (s. Fig. 1 und Fig. 5A bzw. 5B sowie Fig. 6), oder zwischen zwei ein und der selben Vermittlungsstation, z.B. 1, zugeordneten Teilnehmerstationen 1.1 und 1.2 (s. Fig. 7A, 7B und 8), zustande kommt, ergeht eine Aufforderung zum Aufbau der Kommunikation, wobei eine Teilnehmerstation, z.B. 1.1, durch eine entsprechende Anfrage diese Phase auslöst; danach erfolgt der Aufbau der sicheren Kommunikation und schließlich die eigene Kommunikation unter Verwendung des erzeugten Quanten-Schlüssels.

Die einzelnen Schritte, wenn eine Teilnehmerstation, z.B. 1.1, zum Aufbau einer Kommunikation mit einer anderen Teilnehmerstation, z.B. 2.1 oder 1.2, auffordert, sowie der Aufbau der sicheren Kommunikation werden nun nachfolgend näher erläutert. Dabei können in den einzelnen Vermittlungsstationen Informationen betreffend die Verbindungen je nach Konzeption des Kommunikationssystems gespeichert sein, es sollten jedoch in den Vermittlungsstationen alle generierten Schlüssel-Bitfolgen nach dem Aufbau der sicheren Kommunikation und vor Durchführung der direkten Kommunikation zwischen den Teilnehmerstationen unter Verwendung des generierten Schlüssels, gelöscht werden. Bei der unter Anwendung des erzeugten Schlüssels erfolgenden Kommunikation kann auf unterschiedliche Algorithmen etwa aus den Bereichen der Block- und Stromchiffren zurückgegriffen werden. Jedenfalls soll auch in den Teilnehmerstationen unmittelbar nach Beenden der Kommunikation der für diese Kommunikation generierte Schlüssel verworfen und nicht mehr benutzt werden. Er darf im System nicht gespeichert werden, und er darf, abgesehen von den Kommunikationspartnern, niemandem zugänglich gemacht werden.

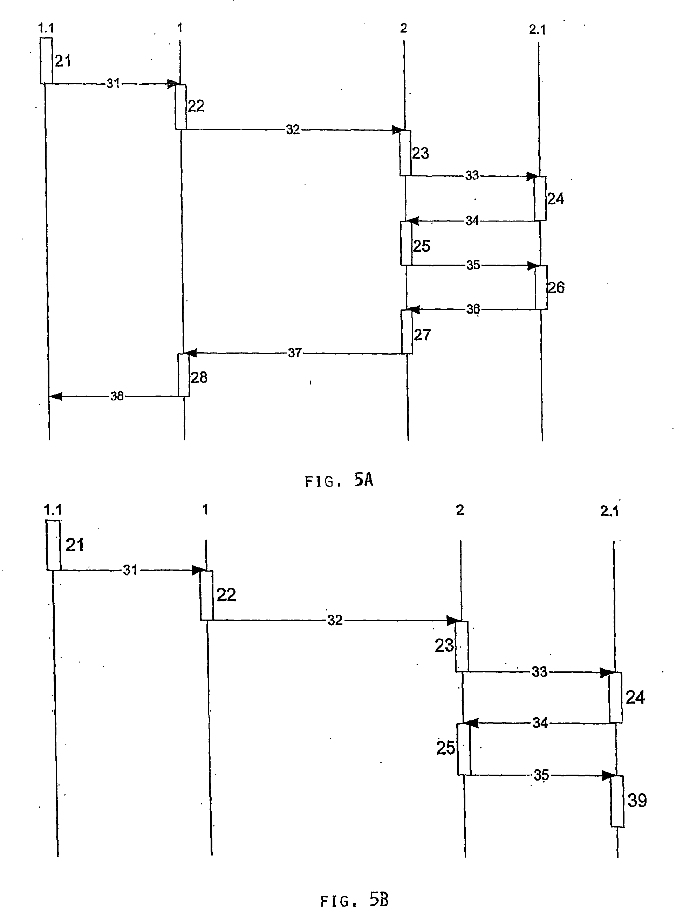

In Fig. 5A ist ein Schema zur Veranschaulichung der Vorgänge bei der Aufforderung zum Aufbau einer Kommunikation veranschaulicht, wobei im Einzelnen ein ressourcenorientierter Aufbau zugrunde liegt. Bei einem solchen ressourcenorientierten Aufbau werden im Gegensatz zu einem geschwindigkeitsorientierten Aufbau (wie nachfolgend anhand der Fig. 5B erläutert werden soll) alle Teilschritte von der "rufenden" Teilnehmerstation, z.B. 1.1, gestartet, so dass mehr Kommunikationsschritte als beim geschwindigkeitsorientierten Aufbau durchgeführt werden müssen. Es ergibt sich aber die Möglichkeit, auf die Antwort des Partners, d.h. der gerufenen Teilnehmerstation, z.B. 2.1, nach Übermittlung des Wunsches zur Kommunikation zu reagieren und erst danach den ressourcenaufwendigen Aufbau der sicheren Kommunikation zu initiieren.

Nachfolgend werden der Einfachheit halber die Teilnehmerstationen auch einfach als "Teilnehmer" bezeichnet, und jene Teilnehmerstation, von der eine Aufforderung ausgeht, wird auch als "Initiator" oder als "rufender Teilnehmer" bezeichnet, wogegen die gerufene Teilnehmerstation auch als "Zielstation" bezeichnet werden soll.

Gemäß Fig. 5A wünscht die Teilnehmerstation 1.1, die der Vermittlungsstation 1 zugeordnet ist, eine Kommunikation mit der Teilnehmerstation 2.1, die der Vermittlungsstation 2 zugeordnet ist. Die Bezeichnung der Teilnehmerstationen und Vermittlungsstationen ist dabei ohne Beschränkung der Allgemeinheit zu verstehen.

In Fig. 5A, ebenso wie in den nachfolgenden Figuren 5B bis Fig. 8, sind mit den vertikalen Blöcken allgemein Kommunikationsschritte (in Fig. 5A: Kommunikationsschritte 21 bis 28) angegeben, und mit den horizontalen Pfeilen zwischen den einzelnen Stationen 1.1, 1, 2, 2.1 sind Datenübermittlungen (in Fig. 5A: Datenübermittlungen 31 bis 38) angedeutet. Im Zuge der dargestellten Aufforderung zum Aufbau einer Kommunikation sendet der rufende Teilnehmer 1.1 gemäß Block 21 als erstes eine Anfrage an seine zugehörige Vermittlungsstation 1, wobei die Datenübermittlung gemäß Pfeil 31 seine Identifikation sowie den gewünschten Partner (Zielstation 2.1) enthält. Gemäß Block 22 überprüft dann die Vermittlungsstation 1 die vom Initiator 1.1 erhaltenen Daten (z.B. hinsichtlich Authentifikation, Autorisierung, Account-Informationen usw.) und übermittelt im Falle eines positiven Ergebnisses dieser Überprüfung die Anfrage weiter an die für den gerufenen Teilnehmer 2.1 zuständige Vermittlungsstation 2 (was wie vorstehend anhand der Figuren 2 und 3 erläutert direkt oder über andere Vermittlungsstationen geschehen kann). Die gemäß Pfeil 32 dabei übermittelten Daten geben vor allem den gewünschten Teilnehmer 2.1 sowie auch den rufenden Teilnehmer 1.1 an.

Gemäß Block 23 fordert sodann die Vermittlungsstation 2 den ihr zugeordneten gerufenen Teilnehmer 2.1 zur Kommunikation auf, wobei sie gemäß Pfeil 33 eine Anfrage zur Identifikation übermittelt, auf die der gerufene Teilnehmer 2.1 gemäß Block 24 und mit der Übermittlung seiner Daten zurück zur Vermittlungsstation 2 gemäß Pfeil 34 antwortet. Gemäß Block 25 überprüft dann die Vermittlungsstation 2 die Daten des gerufenen Teilnehmers 2.1 (bezüglich Authentifikation, Autorisierung, Account-Information usw.), und, wenn das Überprüfungsergebnis positiv ist, übermittelt sie die die gewünschte Kommunikation betreffenden Informationen an den gerufenen Teilnehmer 2.1, vgl. Anfrage-Pfeil 35 in Fig. 5A. Diese Informationen enthalten dabei insbesondere Daten betreffend den rufenden Teilnehmer 1.1. Gemäß Block 26 bestätigt dann der gerufene Teilnehmer 2.1 die Anfrage positiv, und er sendet gemäß Pfeil 36 als Antwort diese Bestätigung mit einer Aufforderung zur Kommunikation zurück an die Vermittlungsstation 2, welche ihrerseits - s. Block 27 - die Antwort an die Vermittlungsstation 1 weiterleitet, vgl. auch Pfeil 37; gemäß Block 28 leitet sodann die Vermittlungsstation 1 diese Antwort an den rufenden Teilnehmer 1.1 weiter, s. auch die Datenübermittlung gemäß Pfeil 38.

Nunmehr kann der eigentliche Aufbau der sicheren Kommunikation, unter Generierung des Quanten-Schlüssels für die Kommunikationssitzung, erfolgen, und dies wird nachfolgend anhand der Fig. 6 noch näher erläutert. Zuvor soll jedoch anhand der Fig. 5B noch der Fall beschrieben werden, dass eine Aufforderung zu einem geschwindigkeitsorientierten Aufbau einer Kommunikation ergeht.

Im Gegensatz zum ressourcenorientierten Ansatz wird im Fall des geschwindigkeitsorientierten Kommunikationsaufbaus nach der Aufforderung zur Kommunikation die Antwort der Zielstation 2.1 nicht direkt zurück zum Initiator 1.1 geleitet, vielmehr übernimmt die Zielstation 2.1 in Antwort auf die Aufforderung die aktive Rolle beim Aufbau der sicheren Kommunikation, wobei die Anzahl der benötigten Einzelschritte reduziert und der Kommunikationsaufbau beschleunigt werden kann.

Im zugehörigen Schema gemäß Fig. 5B sind die den Vorgang gemäß Fig. 5A entsprechenden Kommunikationsschritte 21 bis 25 mit den selben Bezugszeichen bezeichnet, und ebenso sind die entsprechenden Datenübermittlungen mit den Pfeilen 31 bis 35 angegeben. Eine neuerliche Beschreibung dieser Schritte bzw. Datenübermittlungen kann sich daher im Hinblick auf die Erläuterungen zu Fig. 5A erübrigen. Als Unterschied zum Vorgang gemäß Fig. 5A ergibt sich nunmehr jedoch nach Mitteilung der Daten des anfragenden Teilnehmers 1.1 gemäß der Datenübermittlung, Pfeil 35, im Schema von Fig. 5B, dass nunmehr die gerufene Teilnehmerstation 2.1 gemäß Block 39 die Anfrage positiv bestätigt und selbst unmittelbar die aktive Rolle beim nachfolgenden Aufbau der sicheren Kommunikation - anstatt des rufenden Teilnehmers 1.1 - übernimmt.

Der Aufbau der sicheren Kommunikation ist schematisch in Fig. 6 gezeigt, wobei dieser Aufbau für beide vorstehenden Varianten (ressourcenorientierter und geschwindigkeitsorientierter Kommunikationsaufbau) in entsprechender Weise gültig ist.

Die Kommunikationsaufbau-Anfrage, wie vorstehend erläutert, ist dabei in Fig. 6 schematisch mit dem durchgehenden Pfeil 40 veranschaulicht.

Mit den Blöcken 41 bis 47 sind sodann wieder die nachfolgend noch näher erläuterten Kommunikationsschritte bezeichnet, und mit den Pfeilen bzw. Doppelpfeilen 48 bis 52 die konkreten Datenübermittlungen, nämlich insbesondere Übermittlungen von Schlüssel-Bitfolgen.

Im Einzelnen ist gemäß Block 41 der rufende Teilnehmer 1.1 zur Kommunikation bereit, und er generiert gemeinsam mit der Vermittlungsstation 1 über die zugehörige Quantenleitung 3 (s. Fig. 1) die erste Schlüssel-Bitfolge 48 ("Stream 1"), vgl. auch Block 42, der die Schlüssel-Bitfolge-Erzeugung auf Seiten der Vermittlungsstation 1 veranschaulicht. Die erste Schlüssel-Bitfolge 48 wird dabei wie beschrieben auf Basis von Quantenmechanismen generiert.

Unabhängig davon wird gemäß den Blöcken 43 und 44 sowie dem Doppelpfeil 49 zwischen der anderen Vermittlungsstation 2 und dem gerufenen Teilnehmer 2.1 in entsprechender Weise eine zweite Schlüssel-Bitfolge (Doppelpfeil 49), ein sog. "Stream 2", auf Basis von Quantenmechanismen und über die dortige Quantenleitung 3 erzeugt.

Gemäß Block 45 verschlüsselt die erste Vermittlungsstation 1 durch ein zwischen den Vermittlungsstationen 1, 2 vereinbartes Verfahren die erste Schlüssel-Bitfolge und übermittelt diese in verschlüsselter Form an die zweite Vermittlungsstation 2, vgl. auch Pfeil 50, der diese Übermittlung der verschlüsselten ersten Schlüssel-Bitfolge veranschaulicht. Gemäß Block 46 erzeugt dann die zweite Vermittlungsstation 2 aus der verschlüsselten ersten Bitfolge sowie aus der zweiten Schlüssel-Bitfolge (Doppelpfeil 49) eine dritte Schlüssel-Bitfolge ("Stream 3), die gemäß Pfeil 51 an den gerufenen Teilnehmer 2.1 übermittelt wird. Dieser erzeugt gemäß Block 47 aus der erhaltenen dritten Bitfolge 51 und der ihm bereits bekannten zweiten Schlüssel-Bitfolge (s. Pfeil 49) die erste Schlüssel-Bitfolge (s. auch Pfeil 48 in Fig. 6), und diese erste Schlüssel-Bitfolge wird sodann gemäß Pfeil 52 für die weitere Kommunikation gemeinsam mit dem rufenden Teilnehmer 1.1 als Schlüssel, als sog. "Session Key", verwendet.

In den Figuren 7A und 7B ist sodann der Sonderfall dargestellt, dass beide Teilnehmerstationen, und zwar die rufende Teilnehmerstation 1.1 ebenso wie die gerufene Teilnehmerstation 1.2, ein und der selben Vermittlungsstation 1 zugeordnet sind. Dabei ist wiederum auf die beiden grundsätzlichen Möglichkeiten des ressourcenorientierten Aufbaus (Fig. 7A) bzw. des geschwindigkeitsorientierten Aufbaus (Fig. 7B) Bezug genommen; in Fig. 8 ist dann der für beide Fälle in gleicher Weise gültige Aufbau der sicheren Kommunikation veranschaulicht. Da es sich hierbei wie erwähnt um Sonderfälle der Schemata gemäß Fig. 5A, 5B und 6 handelt, sind in den Figuren 7A, 7B und 8 für entsprechende Kommunikationsschritte und Datenübermittlungen wiederum entsprechende Bezugszeichen verwendet, und es erübrigt sich, soweit Übereinstimmung gegeben ist, auch eine neuerliche Beschreibung dieser Kommunikationsschritte und Datenübermittlungen. Im Einzelnen ergibt sich bei einem Vergleich der Fig. 7A mit der Fig. 5A, dass die beiden Vermittlungsstationen 1 und 2 gemäß Fig. 5A zu bloß einer Vermittlungsstation 1 zusammenzufassen sind, wobei die Datenübermittlungen 32 und 37 wegfallen und die Kommunikationsschritte 22, 23 einerseits bzw. 27, 28 andererseits zusammenfallen. In diesen nunmehr mit 53 bzw. 54 bezeichneten Kommunikationsschritten bzw. Blöcken überprüft - Block 53 - die Vermittlungsstation 1 die Daten des rufenden Teilnehmers 1.1 (Authentifikation, Autorisierung, Account-Information usw.) und fordert nun den gerufenen Teilnehmer 1.2 direkt zur Kommunikation auf; gemäß Block 54 (entsprechend den Blöcken 27 und 28 in Fig. 5A) leitet die Vermittlungsstation 1 nach Erhalt der Bestätigung und Aufforderung zur Kommunikation auf der Seite der gerufenen Teilnehmerstation 1.2 (s. Pfeil 36') diese Antwort direkt an den rufenden Teilnehmer 1.1 weiter, s. Pfeil 38.

Im Übrigen entsprechen die Schritte wie erwähnt jenen gemäß Fig. 5A, so dass sich eine neuerliche Erläuterung erübrigen kann. Es sei nur ergänzend erwähnt, dass die Datenübermittlungen in Fig. 7A, im Hinblick darauf, dass sie zwischen dem gerufenen Teilnehmer 1.2 und der Vermittlungsstation 1 (statt der Vermittlungsstation 2 in Fig. 5A) erfolgen, mit Pfeilen 33' bis 36' (anstatt 33 bis 36) bezeichnet wurden; in entsprechender Weise wurde auch der Überprüfungsschritt mit 25' (statt 25) bezeichnet.

Ähnliches gilt auch für das Schema gemäß Fig. 7B im Verhältnis zu jenem gemäß Fig. 5B, wobei jedoch im Unterschied zu Fig. 7A nur der eine kombinierte Kommunikationsschritt 53 - entsprechend den Schritten 22, 23 in Fig. 5B - anfällt, hingegen im Hinblick auf den Aufbau der Kommunikationsverbindung von Seiten des gerufenen Teilnehmers (s. Block 39) im Vergleich zu Fig. 7A der kombinierte Schritt 54 entfällt.

In entsprechender Weise ergibt sich eine Vereinfachung im Schema gemäß Fig. 8 für den Aufbau der sicheren Kommunikation, wobei wiederum die beiden Vermittlungsstationen 1, 2 gemäß Fig. 6 zusammenfallen und beispielhaft die Vermittlungsstation 1 beide Teilnehmerstationen 1.1 und 1.2 betreut. Dabei fallen die Schritte 42, 43 gemäß Fig. 6 zum kombinierten Schritt 55 zusammen, gemäß welchem die Vermittlungsstation 1 zur Kommunikation bereit ist und unabhängig voneinander mit beiden Teilnehmerstationen 1.1 und 1.2 die Quanten-Schlüssel-Bitfolgen ("Stream 1" und "Stream 2") gemäß den Pfeilen 48 und 49' erzeugt. Mit dem Apostroph bei den Bezugszeichen für die Datenübermittlungen 49, 51 bzw. Schritt 46 soll auch hier wiederum angedeutet werden, dass zwar vergleichbare Datenübermittlungen bzw. Vorgänge erfolgen, jedoch in Verbindung mit der im Vergleich zu Fig. 6 anderen Vermittlungsstation (1 statt 2).

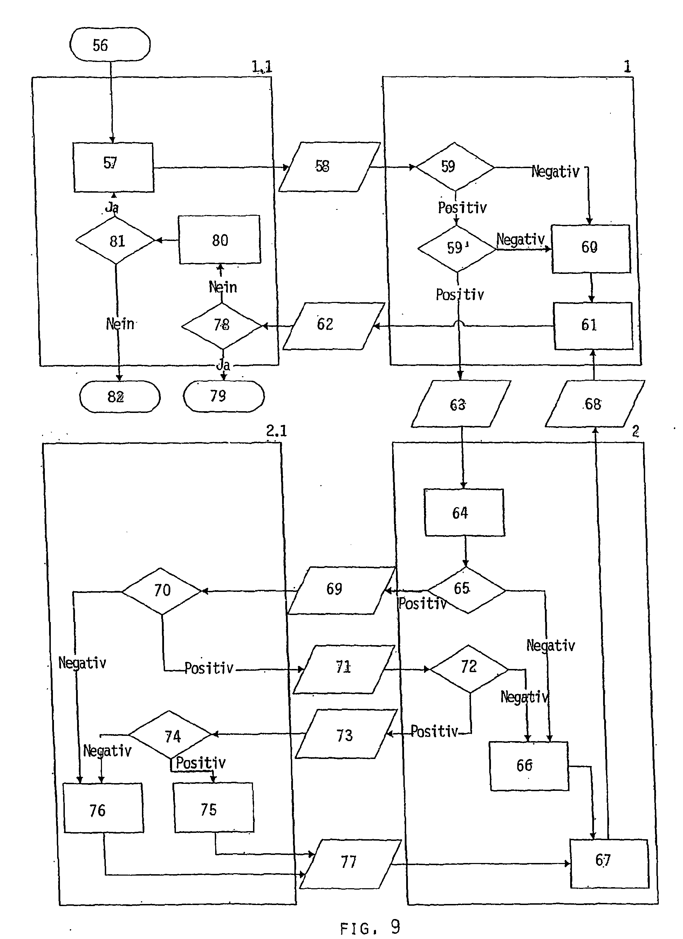

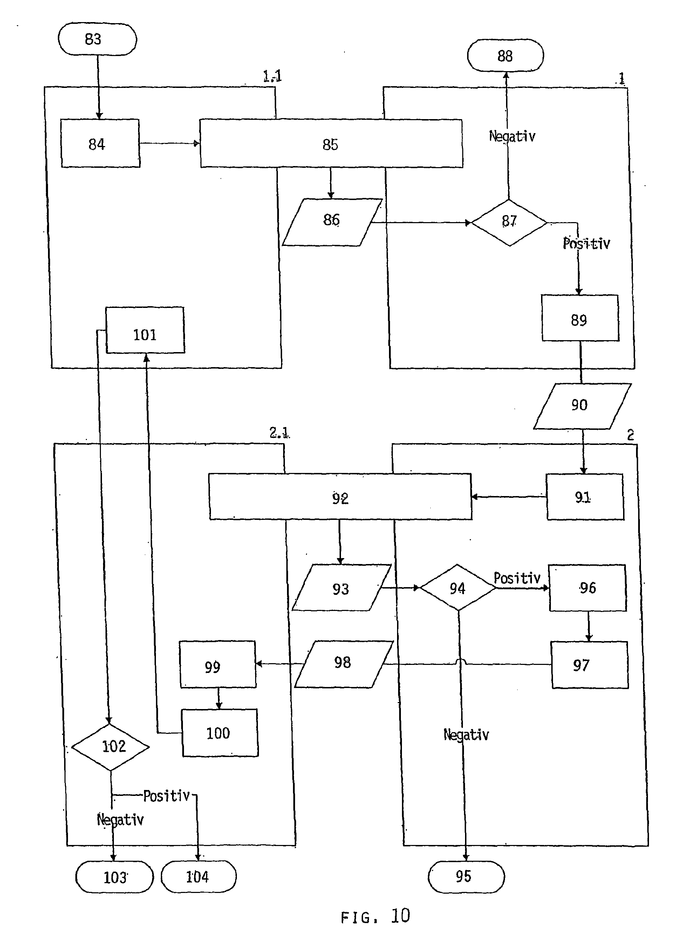

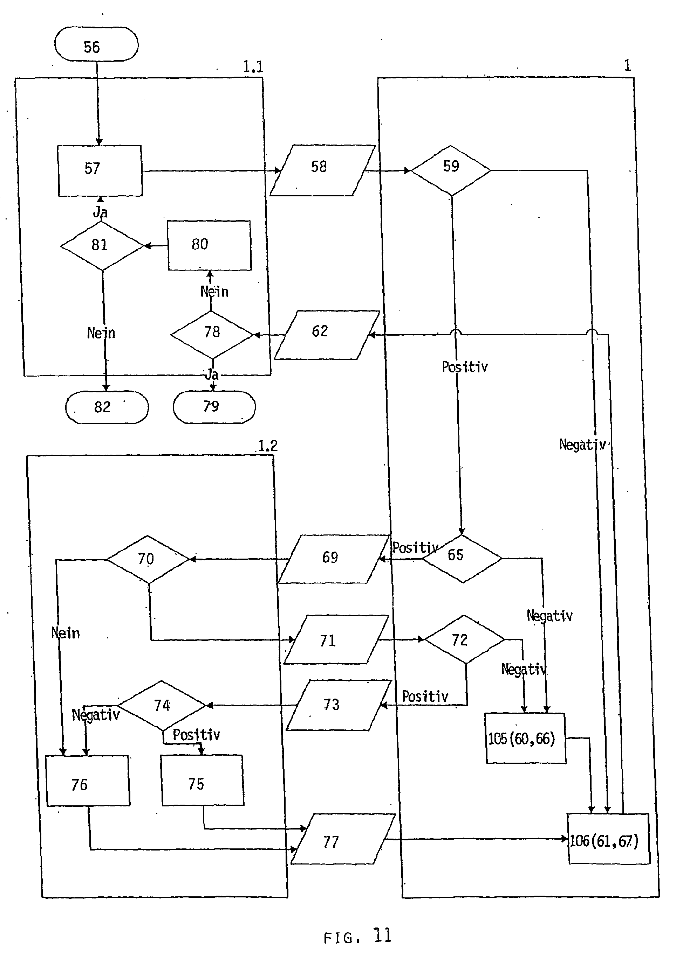

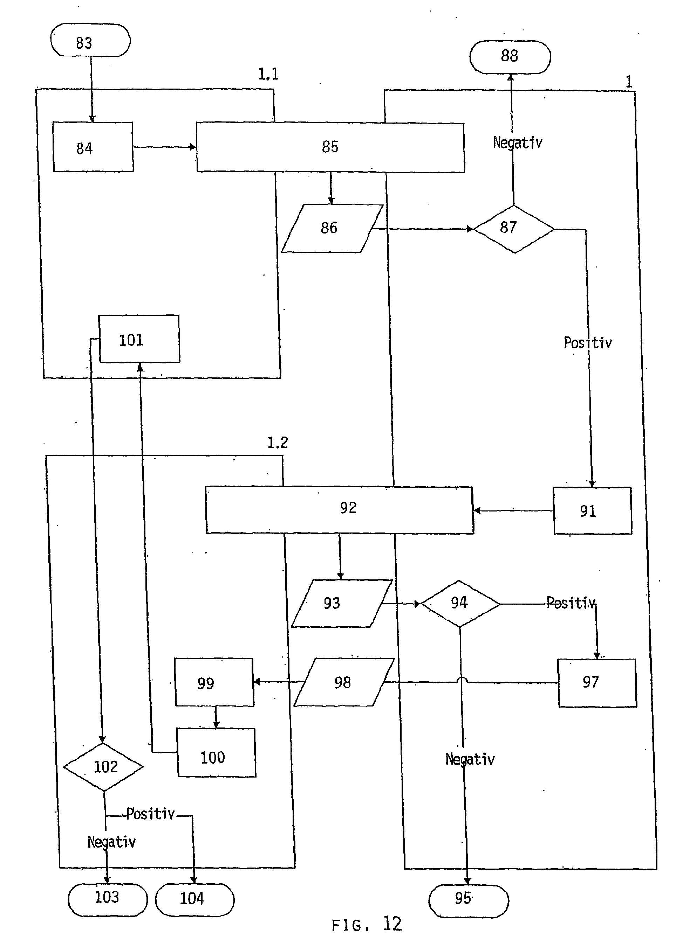

Nachfolgend soll nun anhand von Ablaufdiagrammen, die in Fig. 9 und 10 bzw. Fig. 11 und 12 veranschaulicht sind, die Vorgangsweise bei einer Aufforderung zum Aufbau einer Kommunikation bzw. beim Aufbau der sicheren Kommunikation unter Einbindung von zwei Vermittlungsstationen (Fig. 9 und 10) bzw. für den Fall, dass die beiden Teilnehmerstationen ein und der selben Vermittlungsstation zugeordnet sind (Fig. 11 und 12), beispielhaft näher erläutert werden. Wie erwähnt sind die Teilnehmerstationen immer bestimmten Vermittlungsstationen zugeordnet, und zwischen jeweils einer Vermittlungsstation und einer Teilnehmerstation wird ein Quanten-Schlüssel generiert. Der Regelfall wird dabei der sein, dass verschiedene Teilnehmerstationen am Aufbau der Kommunikation bzw. an der Generierung des Schlüssels beteiligt sind, wobei diese Vermittlungsstationen ihrerseits wiederum entweder direkt oder über eine beliebige Netzstruktur miteinander in Verbindung stehen. Im Sonderfall sind wie bereits vorstehend erläutert die an der aufzubauenden Kommunikation beteiligten Teilnehmer ein und der selben Vermittlungsstation zugeordnet, also in ein und der selben "Vertrauenszone" ("Trust"-Zone) angeordnet.

Am Beginn des Ablaufs zur Herstellung einer Kommunikationsverbindung muss überprüft werden, ob es überhaupt möglich und im Sinn des Netzbetreibers und der beiden Teilnehmer ist, eine Verbindung zwischen den Teilnehmern herzustellen. Gemäß Fig. 9 wird demgemäß nach einem Startschritt 56 bei Block 57 eine Aufforderung zur Kommunikation erstellt, in dem die benötigten Daten zusammengestellt und in Form eines Datenpaketes vorbereitet werden. Eine solche Kommunikations-Aufforderung kann beispielsweise folgenden Inhalt haben:
- Initiator: Die Identifikation des Initiators, z.B. 1.1, beispielsweise in Form einer eindeutigen Netzadresse vergleichbar mit Adressen in anderen Netzwerkprotokollen wie IP.
- Zielstation: Identifikation des gerufenen Teilnehmers, z.B. 2.1, der zur Kommunikation aufgefordert wird.
- Zeitpunkt der Kommunikationsaufnahme: Mit dieser Information wird der gewünschte Zeitpunkt der Kommunikationsaufnahme festgelegt. Optional könnte ein Token für einen sofortigen Kommunikationsaufbau definiert werden.
- Bedingungen des Kommunikationsaufbaus: Diese Information erlaubt die Definition von Tokens bezüglich unterschiedlicher Eigenschaften der Kommunikation. Beispiele für solche Tokens wären: Träger der Kommunikationskosten (Initiator, Zielstation, anderer Account z.B. eines Unternehmens), Verantwortung für die übertragenen Daten, Priorität der Kommunikation, Vertraulichkeitsstufe etc.

Diese Anfrage wird gemäß Block 58 über eine öffentliche Leitung an die zuständige Vermittlungsstation, z.B. 1, weitergeleitet.

Eingehende Anfragen werden von der jeweiligen Vermittlungsstation, hier also der Vermittlungsstation 1, überprüft. Insbesondere werden die Daten des Initiators 1.1 überprüft, s. Block 59. Eine solche Überprüfung könnte die Prüfung verschiedener Informationen beinhalten, wie z.B. die Authentifizierung des Initiators, Berechtigung des Initiators zur Kommunikation (mit Zielstation, mit dieser Vertraulichkeitsstufe, zu diesem Zeitpunkt etc.), Accounting-Informationen etc. Ein negatives Ergebnis dieser Überprüfung führt gemäß Block 60 zum Abbruch der Kommunikation und zum Generieren einer entsprechenden Antwort gemäß Block 61, wobei diese Antwort zum Initiator 1.1 - gemäß Block 62 - zurückgesendet wird.

Bei einem positiven Ergebnis der Überprüfung bei Block 59 werden gemäß Block 59' die Informationen bezüglich der Zielstation 2.1 überprüft. Die Überprüfung könnte hier Informationen wie beispielsweise folgende betreffen: Erreichbarkeit der Zielstation, Erlaubnis der Kommunikation mit dem Initiator, Accounting-Informationen der Zielstation, Vertraulichkeitsstufe der Kommunikation etc. Bei einem negativen Ergebnis der Überprüfung wird die Kommunikation wiederum abgebrochen (Block 60) und eine entsprechende Meldung an den Initiator weitergeleitet (Blöcke 61, 62).

Andernfalls wird die Anfrage an die für die Zielstation 2.1 zuständige Vermittlungsstation 2 weitergeleitet, s. Block 63 in Fig. 9. Diese Vermittlungsstation 2 kann auf unterschiedliche Art und Weise erreicht werden. Beispiele hiefür wären eine hierarchische Organisation der einzelnen Vermittlungsstationen (s. Fig. 2) oder über eine direkte Verbindung aller Vermittlungsstationen (s. Fig. 3).

Die Anfrage wird von der der Zielstation 2.1 zugeordneten Vermittlungsstation 2 gemäß Block 64 empfangen und verarbeitet. Im Rahmen dieser Verarbeitung werden die Daten der Zielstation 2.1 überprüft, s. Block 65, wobei z.B. die Accounting-Informationen der Zielstation 2.1 überprüft werden, da diese eventuell nur der zuständigen Vermittlungsstation 2 bekannt sind. Ebenso könnten Informationen bezüglich Grad der Vertraulichkeit oder Kreis der erlaubten Kommunikationspartner nur der zuständigen Vermittlungsstation 2 bekannt sein und daher erst in diesem Schritt, Block 65, überprüft werden. Ein negatives Ergebnis der Überprüfung führt zu einem Abbruch der Kommunikation, Block 66, und zu einer entsprechenden Meldung, s. Block 67, die gemäß Block 68 an die erste Vermittlungsstation 1 zurückgesendet wird.

Optional kann bei einem positiven Überprüfungsergebnis von der zuständigen Vermittlungsstation 2 die Zielstation 2.1 gemäß Block 69 zur Authentifizierung aufgefordert werden. Gleichzeitig würde die Zielstation 2.1 von der Aufforderung zur Kommunikation informiert werden. An dieser Stelle könnten alle Informationen der Anfrage übermittelt werden, optional könnten diese aber auch wie in Fig. 9 dargestellt erst nach einer erfolgreichen Identifikation übermittelt werden. Im dargestellten Fall werden die für die Kommunikation benötigten Daten erst nach einer positiven Überprüfung der Identität der Zielstation 2.1 übermittelt, um einen höheren Grad an Sicherheit zu gewährleisten. Gemäß Fig. 9 werden also nach der Entscheidung 70 zur Beantwortung der Aufforderung die Identifikationsdaten (gemäß Block 71) an die zugehörige Vermittlungsstation 2 zurückgesendet, wo sie gemäß Block 72 überprüft werden.

Wird die Überprüfung der Identität der Zielstation 2.1 gemäß Block 72 mit einem negativen Ergebnis beendet, wird wiederum der Aufbau der Kommunikation nach der Erstellung einer entsprechenden Antwort beendet, s. die Blöcke 66, 67, und die Antwort wiederum - s. Block 68 - zur rufenden Vermittlungsstation 1 zurück übermittelt.

Andernfalls wird die Anfrage gemäß Block 73 an die Zielstation 2.1 weitergeleitet, woraufhin diese gemäß Block 74 dem Aufbau einer Kommunikation zustimmen oder diese ablehnen kann. Die Antwort der Zielstation 2.1 wird an den Initiator 1.1 sowie an alle beteiligten Vermittlungsstationen 2, 1 übermittelt, vgl. Blöcke 75, 76 sowie Block 77. Abhängig von der vereinbarten Form der Kommunikation (Vertraulichkeitsstufe, Accounting-Information etc.) sowie vom vereinbarten Zeitpunkt können nun - im Fall einer positiven Antwort, Block 75 - die entsprechenden Initialisierungen vorbereitet werden. Die jeweilige Antwort wird beim Initiator, d.h. rufenden Teilnehmer 1.1, gemäß Block 78 überprüft, und im positiven Fall ist gemäß Feld 79 die Bereitschaft zur Kommunikation gegeben.

Im Falle einer negativen Antwort, bei Abbruch der Kommunikation gemäß Block 80, kann der Initiator 1.1 erneut einen Kommunikationsaufbau beginnen, s. Abfrage 81 in Fig. 9. Durch entsprechende Mechanismen seitens der zuständigen Vermittlungsstation 1 können hier Parameter wie z.B. maximale Anzahl an Kommunikationsversuchen pro Zeiteinheit, Kosten pro Kommunikationsversuch etc., zur Steuerung eingesetzt werden. Wenn die Entscheidung bei der Abfrage 81 negativ ist, kommt es gemäß Feld 82 endgültig zum Abbruch des Kommunikationversuchs.

Um einen höheren Grad an Sicherheit zu erreichen, ist es auch möglich, alle Kommunikationsschritte zwischen den beteiligten Kommunikationspartnern zu verschlüsseln. Dafür würden sich sowohl symmetrische Verfahren, wie z.B. Blockchiffren (AES, IDEA, etc.) und Stromchiffren (Vernam Varianten, SEAL 2.0 etc.), als auch asymmetrische Verfahren, beispielsweise basierend auf einer zentralen PKI, eignen.

Nachdem wie vorstehend beschrieben die Kommunikation initialisiert wurde, wird im nächsten Schritt - s. Fig. 10 - die Generierung der benötigten Schlüssel-Bitfolgen sowie der Aufbau der Kommunikation durchgeführt.

Der Initiator 1.1 der Kommunikation generiert gemeinsam mit seiner Vermittlungsstation 1 einen "Stream 1" mit vereinbarten Qualitätskriterien und einer entsprechenden Schlüssellänge. Um in weiterer Folge mit einer Verschlüsselung durch z.B. AES (AES - "Announcing the Advanced Encryption Standard", Federal Information Processing Standards Publication 197, NIST) zu arbeiten, wird eine Schlüssellänge von 256 Bit vereinbart. In Fig. 10 ist dies, einem Startschritt 83 folgend, mit den Blöcken 84 (Initiierung der Stream 1-Generierung) und 85 (Stream 1-Generierung) veranschaulicht.

Im nächsten Schritt wird der Status der Generierung (s. Block 86) überprüft (Block 87). Ein negativer Status führt zum Abbruch der Kommunikation, s. Feld 88.

Sollte der Status der Generierung positiv sein, wird der generierte Stream 1 durch die Vermittlungsstation 1 des Initiators 1.1 - gemäß Block 89 - verschlüsselt. Das Verschlüsseln des Stream 1 kann z.B. durch symmetrische Verfahren wie AES oder durch asymmetrische Verfahren erfolgen.

Nach dem Erhalt des verschlüsselten Stream 1 (s. Block 90) initiiert die Vermittlungsstation 2 der Zielstation 2.1 gemäß Block 91 die Generierung der zweiten Schlüssel-Bitfolge (Stream 2) mit der Zielstation 2.1, s. Block 92. Auch hier könnten entsprechende Qualitätskriterien vereinbart werden, die Länge könnte z.B. abhängig von dem in weiterer Folge gewählten Verfahren der Länge des Stream 1 entsprechen. Anschließend wird der Status (s. Block 93) überprüft (Block 94). Im Falle eines negativen Status wird die Kommunikation abgebrochen, s. Feld 95.

Bei einem positiven Status wird im nächsten Schritt (Block 96) der verschlüsselte Stream 1 entschlüsselt und anschließend mit dem generierten Stream 2 zur dritten Schlüssel-Bitfolge - Stream 3 - verschlüsselt, s. Block 97. Beispiel für eine Verschlüsselung wäre die übertragslose Addition (XOR Operation) der beiden Streams 1 und 2. Dafür ist es notwendig, dass beide Streams 1 und 2 die selbe Länge haben und zuvor definierte Qualitätskriterien erfüllen.

Der auf diese Weise generierte Stream 3 wird gemäß Block 98 zur Zielstation 2.1 übertragen und dort mit dem Stream 2 wieder entschlüsselt, s. Block 99. Das Ergebnis der Entschlüsselung (Stream 1) wird in weiterer Folge als "Session Key" bezeichnet und gemäß Block 100 als Schlüssel beim Verbindungsaufbau verwendet.

Die Zielstation 2.1 startet nun den Verbindungsaufbau mit dem Initiator 1.1, s. Block 100, und letzterer nimmt die Kommunikation auf, s. Block 101. Dafür könnten wieder Algorithmen wie AES oder IDEA Verwendung finden. Anschließend wird der Verbindungsaufbau überprüft, s. Block 102. Liefert diese Überprüfung der Kommunikation ein negatives Ergebnis, so wird die Kommunikation abgebrochen, bei einem positiven Ergebnis ist die Kommunikation im Sinne dieses Verfahrens sicher, s. (Feld 103) Feld 104, und es kann die Kommunikation unter Verwendung des "Session Key" (Stream 1) erfolgen.

Nach dem Abbruch der Kommunikation ergeht an alle an der Kommunikation beteiligten Kommunikationspartner eine entsprechende Meldung. Der Systembetreiber kann das weitere Vorgehen im Fall eines Abbruchs definieren und z.B. fehlgeschlagene Schritte wiederholen. Ob eine Wiederholung möglich ist, könnte auch von den im ersten Schritt vereinbarten Bedingungen des Kommunikationsaufbaus abhängen; auch könnte hiefür der vereinbarte Zeitpunkt der Kommunikationsaufnahme relevant sein.

Die Figuren 11 und 12 beziehen sich wie erwähnt wiederum auf den Fall, dass die gerufene Teilnehmerstation, hier 1.2, der selben Vermittlungsstation 1 zugeordnet ist wie die rufende Teilnehmerstation 1.1. Wenn dabei die einzelnen Schritte beim Ablauf betreffend die Aufforderung zur Kommunikation (s. Fig. 11 im Vergleich zu Fig. 9) betrachtet werden, so ergibt sich, dass verschiedene Schritte, die die Datenübermittlung zwischen den Vermittlungsstationen 1 und 2 betreffen, in Fig. 11 im Vergleich zu Fig. 9 entfallen können, wie nämlich insbesondere die Blöcke 63, 59', 63, 64 und 68 von Fig. 9. Die Überprüfung der Daten der Zielstation 1.2 erfolgt nur einmal, s. Block 65, ebenso wie nur einmal - gemäß Block 105 - ein Abbruch der Kommunikation vorgesehen ist, d.h. Block 105 in Fig. 11 entspricht der Kombination der Blöcke 60 und 66 in Fig. 9; ähnliches gilt auch für die Erstellung der jeweiligen Antwort gemäß Block 106 in Fig. 11, der der Kombination der Blöcke 61 und 67 in Fig. 9 entspricht. Im Übrigen ist der Ablauf gleich wie in Fig. 9, so dass sich eine weitere Erläuterung der Fig. 11 zwecks Vermeidung von Wiederholungen erübrigen kann.

Ähnliches gilt auch für die Darstellung in Fig. 12 im Vergleich zu jener von Fig. 10, betreffend den Aufbau der sicheren Kommunikation, wobei ebenfalls bedingt durch die Behandlung innerhalb ein und der selben Vermittlungsstation 1 in Fig. 12 die in Fig. 10 dargestellten Blöcke 89 und 90 betreffend die Verschlüsselung von Stream 1 und dessen Übermittlung zur weiteren Vermittlungsstation entfallen. In der Folge entfällt auch die Entschlüsselung des ersten Stream gemäß Block 96 in Fig. 10 beim Ablauf von Fig. 12, und es kann dort sofort der erste Stream 1 mit dem zweiten Stream 2 zum Stream 3 verschlüsselt werden, s. Blöcke 97 und 98.

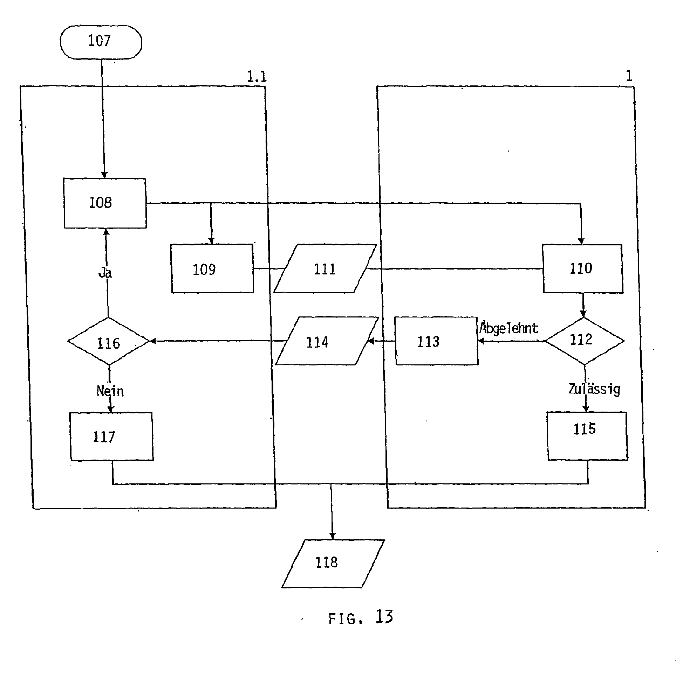

Abschließend soll nun noch anhand der Fig. 13 die Vorgangsweise bei der Erzeugung einer Schlüssel-Bitfolge, eines "Stream", näher erläutert werden. Dabei erstellt nach einem Startschritt 107 der Initiator, d.h. die rufende Teilnehmerstation, also beispielsweise der Teilnehmer 1.1, am Beginn der Generierung eine entsprechende Aufforderung, s. Block 108 in Fig. 13. Diese Aufforderung könnte unterschiedliche Token beinhalten, wie z.B. die Länge des zu generierenden Stream, die Qualitätskriterien des Stream, wie z.B. FIPS 140-2 (s. "Security Requirements for Cryptographic Modules", Federal Information Processing Standards Publication, S. 140-2, NIST), Kriterien nach Golomb (s. A. J. Menezes, P. c. van Oorschot, S. A. Vanstone; "Handbook of Applied Cryptography"; CRC Press 1996; S. 180ff), Lineare Komplexität (s. A. J. Menezes, P. c. van Oorschot, S. A. Vanstone; "Handbook of Applied Cryptography"; CRC Press 1996; S. 198ff) etc.

Die Aufforderung wird an beide beteiligte Kommunikationspartner weitergeleitet und dient zur Einleitung entsprechender Schritte wie z.B. Vorbereitung des Systems (Justierung, Selbsttest etc.), Protokollierung, etc.

Das Generieren des Stream - vgl. Blöcke 109, 110 - erfolgt zwischen den beteiligten Kommunikationspartnern also z.B. zwischen dem Initiator 1.1 und der Vermittlungsstation 1, durch ein entsprechendes Protokoll, wie beispielsweise die Protokolle von Bennett und Brassard (s. C. H. Bennett, F. Bessette, G. Brassard, L. Salvail, J. Smolin, "Experimental Quantum Cryptography", J. Cryptology (1992) 5; S. 3-28). Nach der Generierung eines Stream der vereinbarten Länge - s. auch Block 111 - wird der Stream durch einen der beteiligten Kommunikationspartner, z.B. durch die Vermittlungsstation 1, gemäß Block 112 überprüft. Im Rahmen dieser Überprüfung können die zuvor in der Aufforderung definierten Qualitätskriterien überprüft werden. Sollte der generierte Stream im Rahmen der Überprüfung abgelehnt werden, wird eine entsprechende Fehlermeldung generiert (Block 113) und an den zweiten Kommunikationspartner - hier den Initiator 1.1 - übermittelt, s. Block 114.

Sollte der Stream im Rahmen der Überprüfung als zulässig eingestuft werden, wird gemäß Block 115 eine positive Statusmeldung generiert. Diese bestätigt, dass beide Kommunikationspartner nun über einen gemeinsam generierten Schlüssel verfügen.

Nach einer Fehlermeldung hingegen könnte es dem Initiator 1.1 offen stehen, einen weiteren Versuch zur Schlüsselgenerierung zu unternehmen, vgl. Block 116. Der Systembetreiber könnte an dieser Stelle steuernd eingreifen, indem z.B. nur eine bestimmte Anzahl von Versuchen pro Zeiteinheit erlaubt werden, jeder Versuch einzeln verrechnet wird etc. Sollte der Versuch nicht wiederholt werden, wird gemäß Block 117 eine negative Statusmeldung generiert, die bestätigt, dass kein gemeinsamer Schlüssel generiert werden konnte.

Der endgültige Status ist mit Block 118 in Fig. 13 veranschaulicht und bestimmt den weiteren Ablauf (verschlüsselte Kommunikation oder Abbruch).

## Patentansprüche

1. Kommunikationssystem mit Quantenkryptographie, mit an Quantenkanälen (3) angeschlossenen Teilnehmerstationen (1.i, 2.i) und den Quantenkanälen zugeordneten quantenkryptographischen Einrichtungen (10, 11) zur Generierung eines Quanten-Schlüssels, und mit mehrere miteinander verbundenen Vermittlungsstationen (1, 2) **dadurch gekennzeichnet, dass** die Vermittlungsstationen (1, 2) über öffentliche Leitungen unter Anwendung von vereinbarter Verschlüsselung, ohne quantenkryptographischen Schlüsselaustausch, miteinander kommunizieren, und dass die Teilnehmerstationen (1.i, 2.i) ihrerseits mit den Vermittlungsstationen (1, 2) über die Quantenkanäle (3) zur Generierung eines jeweiligen temporären Quanten-Schlüssels verbunden, und weiters zur Kommunikation über öffentliche Leitungen (4) unter Verwendung des über die Vermittlungsstationen (1, 2) generierten Quanten-Schlüssels eingerichtet sind.

2. Kommunikationssystem nach Anspruch 1, **dadurch gekennzeichnet, dass** die Vermittlungsstationen (1, 2) als quantenkryptographische Einrichtung eine Photonenquelle (10) sowie für den Fall der Verwendung von verschränkten Photonen auch einen Photonendetektor (11) enthalten.

3. Kommunikationssystem nach Anspruch 2, **dadurch gekennzeichnet, dass** die Teilnehmerstationen (1.i, 2.i) nur eine Photonen-Detektionseinrichtung (11') enthalten.

4. Kommunikationssystem nach einem der Ansprüche 1 bis 3, **dadurch gekennzeichnet, dass** die Vermittlungsstationen (1, 2, 6', 7') zumindest teilweise in Form von Punkt-zu-Punkt-Verbindungen miteinander verbunden sind.

5. Kommunikationssystem nach einem der Ansprüche 1 bis 3, **dadurch gekennzeichnet, dass** die Vermittlungsstationen (1, 2, 6-9) zumindest teilweise hierarchisch miteinander verbunden sind.

6. Kommunikationssystem nach einem der Ansprüche 1 bis 5, **dadurch gekennzeichnet, dass** nach einer über die jeweilige Vermittlungsstation (1, 2) übermittelten Kommunikations-Aufforderung die an der gewünschten Kommunikation beteiligten Teilnehmerstationen (1.1, 2.1) jeweils mit ihrer zugehörigen Vermittlungsstation (1, 2) über den Quantenkanal (3) eine gesonderte Schlüssel-Bitfolge erzeugen.

7. Kommunikationssystem nach Anspruch 6, **dadurch gekennzeichnet, dass** die der gerufenen Teilnehmerstation (2.1) zugehörige Vermittlungsstation (2) aus den über die Quantenkanäle (3) erzeugten Schlüssel-Bitfolgen eine dritte Schlüssel-Bitfolge erzeugt und zur gerufenen Teilnehmerstation (2.1) übermittelt, die hieraus unter Verwendung der ihr bekannten, von ihr zusammen mit der zugehörigen Vermittlungsstation erzeugten Schlüssel-Bitfolge die auf Seiten der rufenden Teilnehmerstation (1.1) erzeugte Schlüssel-Bitfolge erzeugt, die dann endgültig als gemeinsamer Schlüssel für die Kommunikation zwischen den Teilnehmerstationen (1.1, 2.1) verwendet wird.

8. Kommunikationssystem nach einem der Ansprüche 1 bis 7, **dadurch gekennzeichnet, dass** bei Beenden der Kommunikation der für diese Kommunikation generierte Quanten-Schlüssel verworfen wird.

9. Kommunikationssystem nach einem der Ansprüche 1 bis 8, **dadurch gekennzeichnet, dass** der generierte Quanten-Schlüssel auf Störungsfreiheit überprüft wird, und dass auf eine etwaige erfasste Störung hin, die einem Abhören zugeordnet wird, der Kommunikationsaufbau abgebrochen und der Schlüssel verworfen wird.

10. Kommunikationssystem nach einem der Ansprüche 1 bis 9, **dadurch gekennzeichnet, dass** vor dem Aufbau einer Kommunikation zwischen Teilnehmerstationen (1.1, 2.1) von diesen an die jeweils zugehörige Vermittlungsstation (1, 2) übermittelte, für sie spezifische Daten, wie z.B. Authentifikationsdaten, von der jeweiligen Vermittlungsstation überprüft werden.

## Claims

1. A communication system using quantum cryptography, comprising subscriber stations (1.i, 2.i) connected to quantum channels (3) and quantum-cryptographic devices (10, 11) associated with the quantum channels, for generating a quantum key, as well as a plurality of interconnected switching stations (1, 2), **characterised in that** the switching stations (1, 2) communicate with each other via public lines, using encryption agreed upon, without quantum-cryptographic key exchange, and **in that** the subscriber stations (1.i, 2.i) in turn are connected to the switching stations (1, 2) via the quantum channels (3) for generating a respective temporary quantum key, and furthermore, are adapted to communicate via public lines (4) using the quantum key generated via the switching stations (1, 2).

2. A communication system according to claim 1, **characterised in that** the switching stations (1, 2) contain a source of photons (10) as quantum-cryptographic device as well as also a photon detector (11), in case interlaced photons are used.

3. A communication system according to claim 2, **characterised in that** the subscriber stations (1.i, 2.i) merely contain a photon detection device (11').

4. A communication system according to any one of claims 1 to 3, **characterised in that** the switching stations (1, 2, 6', 7') are interconnected at least partially in the form of point-to-point links.

5. A communication system according to any one of claims 1 to 3, **characterised in that** the switching stations (1, 2, 6-9) at least partially are hierarchically interconnected.

6. A communication system according to any one of claims 1 to 5, **characterised in that** the subscriber stations (1.1, 2.1) involved in the desired communication generate a separate key bit sequence together with their associated switching station (1, 2) via the quantum channel (3) after a communication request has been transmitted via the respective switching station (1, 2).

7. A communication system according to claim 6, **characterised in that** the switching station (2) associated with the called subscriber station (2.1) generates a third key bit sequence from the key bit sequences generated via the quantum channels (3), and transmits this third key bit sequence to the called subscriber station (2.1) which, using the key bit sequence known to it and generated by it together with the associated switching station, on the basis of this third key bit sequence generates the key bit sequence generated on the part of the calling subscriber station (1.1) which then finally is used as a mutual key for the communication between the subscriber stations (1.1, 2.1).

8. A communication system according to any one of claims 1 to 7, **characterised in that** when ending the communication, the quantum key generated for this communication is discarded.

9. A communication system according to any one of claims 1 to 8, **characterised in that** the generated quantum key is checked for its freedom from interference, and **in that** as a consequence of any possible interference detected which is associated with an eavesdropping, the communication established is disrupted and the key is discarded.

10. A communication system according to any one of claims 1 to 9, **characterised in that** prior to the establishment of a communication between subscriber stations (1.1, 2.1), data transmitted from the latter stations to the respective switching station (1, 2) and specific of them, such as, e.g., authentication data, are checked by the respective switching station.

## Revendications

1. Système de communication par cryptographie quantique, comportant des stations d'abonné (1.i, 2.i) connectées à des canaux quantiques (3) et des dispositifs graphiques de cryptographie quantique (10, 11) associés aux canaux quantiques pour la génération d'un code quantique, et comportant plusieurs stations de commutation (1, 2) connectées les unes aux autres, **caractérisé en ce que** les stations de commutation (1, 2) communiquent les unes avec les autres par l'intermédiaire de lignes publiques en utilisant une codification convenue, sans échange de code par cryptographie quantique, et **en ce que** les stations d'abonné (1.i, 2.i) sont pour leur part connectées aux stations de commutation (1, 2) par l'intermédiaire des canaux quantiques (3) pour la génération d'un code quantique provisoire correspondant, et sont par ailleurs conçues pour la communication par l'intermédiaire de lignes publiques (4) en utilisant le code quantique généré par l'intermédiaire des stations de commutation (1, 2).

2. Système de communication selon la revendication 1, **caractérisé en ce que** les stations de commutation (1, 2) contiennent en tant que dispositifs graphiques de cryptographie quantique une source de photons (10) ainsi qu'un détecteur de photons (11) en cas d'utilisation de photons enchevêtrés.

3. Système de communication selon la revendication 2, **caractérisé en ce que** les stations d'abonné (1.1, 2.1) ne contiennent qu'un dispositif de détection de photons (11')

4. Système de communication selon une des revendications 1 à 3, **caractérisé en ce que** les stations de commutation (1, 2, 6', 7') sont au moins partiellement connectées les unes aux autres sous la forme de connexions point à point.

5. Système de communication selon une des revendications 1 à 3, **caractérisé en ce que** les stations de commutation (1, 2, 6-9) sont au moins partiellement connectées les unes aux autres par une connexion hiérarchique.

6. Système de communication selon une des revendications 1 à 5, **caractérisé en ce qu'**après une demande de communication transmise par l'intermédiaire des stations de commutation respectives (1, 2), les stations d'abonné (1.1, 2.1) concernées par la communication souhaitée produisent chacune par l'intermédiaire du canal quantique (3) une séquence binaire codée séparée avec la station de commutation qui leur est associée (1, 2).

7. Système de communication selon la revendication 6, **caractérisé en ce que** la station de commutation (2) associée à la station d'abonné appelée (2.1) produit à partir des séquences binaires codées produites par l'intermédiaire des canaux quantiques (3) une troisième séquence binaire codée, et la transmet à la station d'abonné appelée (2.1) qui, en utilisant la séquence binaire codée qu'elle connaît et qu'elle a produite avec la station de commutation qui lui est associée, produit la séquence binaire codée produite du côté de la station d'abonné appelante (1.1) qui est enfin utilisée comme code commun pour la communication entre les stations d'abonné (1.1, 2.1).

8. Système de communication selon une des revendications 1 à 7, **caractérisé en ce qu'**à la fin de la communication, les codes quantiques générés pour cette communication sont rejetés.

9. Système de communication selon une des revendications 1 à 8, **caractérisé en ce que** le code quantique généré est vérifié quant à l'absence d'interférence, et **en ce que** si l'on détecte une éventuelle interférence qui est associée à une interception, l'établissement de la communication est interrompu et le code est rejeté.

10. Système de communication selon une des revendications 1 à 9, **caractérisé en ce qu'**avant l'établissement d'une communication entre les stations d'abonné (1.1, 2.1), les données qui leurs sont spécifiques, par exemple données d'authentification transmises des stations d'abonné (1.1, 2.1) aux stations de commutation (1, 2) concernées, sont vérifiées par la station de commutation concernée.
